# EUROPÄISCHE PATENTSCHRIFT

(11) **EP 3 181 334 B1**
(45) Veröffentlichungstag und Bekanntmachung des Hinweises auf die Patenterteilung: **24.04.2019**
(21) Anmeldenummer: 16200616.7
(22) Anmeldetag: 25.11.2016
(51) Int. Cl.: B29C 67/00, B33Y 50/02, B33Y 40/00, B22F 3/105

(54) **VERFAHREN UND VORRICHTUNG ZUR HERSTELLUNG VON DREIDIMENSIONALEN BAUTEILEN MITTELS ÜBERSCHUSSMENGENSENSOR**
METHOD AND DEVICE FOR THE MANUFACTURE OF THREE-DIMENSIONAL COMPONENTS USING AN EXCESS QUANTITY SENSOR
PROCÉDÉ ET DISPOSITIF DE FABRICATION DE COMPOSANTS TRIDIMENSIONNELS À L'AIDE D'UN CAPTEUR DE SURPLUS

(30) Priorität: 01.12.2015 DE 102015015353
(43) Veröffentlichungstag der Anmeldung: 21.06.2017
(73) Patentinhaber: voxeljet AG, 86316 Friedberg (DE)
(72) Erfinder: Ederer, Ingo, 82269 Geltendorf (DE); Günther, Daniel, 81371 München (DE); Günther, Johannes, 86163 Augsburg (DE)
(74) Vertreter: Helbig, Christian

(56) Entgegenhaltungen:
- WO-A1-2016/040453
- DE-A1-102011 088 158
- US-A1- 2004 173 946

## Beschreibung

Die vorliegende Erfindung betrifft ein Verfahren und eine Vorrichtung zum Herstellen von dreidimensionalen gemäß den Ansprüchen 1 und 5. Gemäß der Offenbarung wird formloses Partikelmaterial schichtweise auf ein Baufeld aufgetragen, wobei Partikelmaterial vor eine Rakeleinrichtung auf ein Baufeld gelegt und dann ausgestrichen wird und anschließend das Partikelmaterial selektiv verfestigt wird.

Weiterhin betrifft die Offenbarung eine Vorrichtung zum Herstellen von dreidimensionalen Bauteilen, umfassend eine eine Rakeleinrichtung aufweisende Beschichtungsvorrichtung und eine selektive Verfestigungseinrichtung. US 2004/0173946 A1 beschreibt ein Verfahren zur Herstellung dreidimensionaler Objekte, wobei der Lagenaufbau durch einen optischen Sensor überwacht wird.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht mittels Beschichter (recoater) auf eine Plattform aufgetragen und dieses selektiv mittels eines Druckkopfes mit einem Bindermaterial bedruckt. Der mit dem Binder bedruckte Partikelbereich verbindet und verfestigt sich unter dem Einfluss des Binders und gegebenenfalls eines zusätzlichen Härters. Anschließend wird die Bauplattform um eine Schichtdicke abgesenkt oder die Beschichter-/Druckkopfeinheit angehoben und eine neue Schicht Partikelmaterial aufgetragen, die ebenfalls, wie oben beschrieben, selektiv bedruckt wird. Diese Schritte werden wiederholt, bis die gewünschte Höhe des Objektes erreicht ist. Aus den bedruckten und verfestigten Bereichen entsteht so ein dreidimensionales Objekt (Formteil).

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

Das 3D-Drucken auf Basis pulverförmiger Werkstoffe und dem Eintrag von Flüssigkeiten mit einem Druckkopf ist unter den Schichtbautechniken das schnellste Verfahren.

Mit diesem Verfahren lassen sich verschiedene Fluide, wie beispielsweise Partikelmaterialien, dazu zählen - nicht erschöpfend - natürliche biologische Rohstoffe, polymere Kunststoffe, Metalle, Keramiken und Sande, verarbeiten.

Darüberhinaus gibt es auch weitere Verfahren, wie beispielsweise das Fused-Deposiiton-ModelingFused (FDM)- Schichtbauverfahren, bei dem jeweils die Querschnitte des Bauteils durch ein flüssiges, außerhalb einer Düse sich verfestigendes Medium aufgebaut werden, die Lage der Bauplattform um eine Schichtstärke zur letzten Position geändert wird und diese Schritte solange wiederholt werden, bis das Bauteil fertig ist

Im Folgenden werden alle diese Verfahren unter dem Begriff "Schichtbauverfahren", "dreidimensionale Druckverfahren" oder 3D-Druckverfahren zusammengefasst.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird. Das Material wird also durch energiereiche Strahlung verfestigt. Bei konventionellen Produktionsanlagen werden die Bauteile schichtweise häufig vertikal von oben nach unten hergestellt.

Beim 3D-Drucken mit der Technik Binder-Jetting sind Pulver die Prozessgrundlage. Sie werden wiederholt in dünnen Schichten auf eine Bauplattform aufgetragen und mit Binder bedruckt. Für jede neue Schicht wird die Bauplattform abgesenkt. Analog kann die Beschichterebene gehoben werden oder die Bauplattform als Förderband ausgebildet sein.

Das Material wird dabei beispielsweise in einem Silo vorgehalten und über Förderschnecken in die Produktionsmaschine gebracht. Der Binder wird über händisches Einsetzen von mit Binder gefüllten Kanistern eingebracht, und der Baubehälter kann beispielsweise über Schienen oder auch einfach über einen Transportwagen gerüstet werden. Die Raumrichtungen aller Bewegungen kreuzen sich dabei. Vielfach sind Bewegungen bei Einzelvorgängen in mehrere oder alle Raumrichtungen möglich.

Beim Schichtbildungsprozess der vorgenannten Verfahren wird Pulver beispielsweise vor eine Rakeleinrichtung gelegt, über das Baufeld ausgestrichen und geglättet. Hierzu kommen verschiedene Vorrichtungen zum Einsatz. Zum Einen kann das Pulver vor Beginn des Baufeldes vorgelegt werden. Hierzu eignen sich Schieber, die eine Pulvermenge jeweils in den Wirkungsbereich der Rakeleinrichtung bringen. Zum anderen kann während des Beschichtungsvorganges Pulver vor die Rakeleinrichtung kontinuierlich nachgefördert werden.

Alle Verfahren erzeugen dabei eine Überschussmenge, die sich je nach Verfahren und Einstellung bis zum Ende der Beschichtungsstrecke ansammelt und/oder aus dem Ursprungsvolumen abreichert. Diese Menge wird in dieser Schrift als "Overfeed" (Überschussmenge) bezeichnet. Die Überschussmenge ist dabei die Menge an Pulver, die bei der Beschichtungsfahrt am Ende des Baufeldes vor dem Beschichter hergeschoben wird.

Tritt am Ende der Beschichterstrecke kein Overfeed auf, ist die Schicht mit relativ hoher Sicherheit nicht vollständig verfüllt worden. Das Vorhandensein des Overfeeds am Ende der Beschichterstrecke ist ein Hinweis darauf, dass zu viel Pulver verarbeitet wird, die Schicht aber vollständig verfüllt ist.

Der Erfindung liegt demgemäß als eine Aufgabe zugrunde ein Verfahren und eine Vorrichtung bereitzustellen, die dieses Wissen nutzt, um einen sicheren 4

Prozessablauf zu dokumentieren und gemäss einer bevorzugten Ausführungsform auch zu regeln.

Diese Aufgabe wird gelöst durch ein Verfahren und eine Vorrichtung nach den Ansprüchen 1 und 5.

### Kurze Zusammenfassung der Offenbarung

Die Offenbarung betrifft in einem Aspekt ein Verfahren zum Herstellen von dreidimensionalen Bauteilen, wobei formloses Partikelmaterial, schichtweise in einer Aufnahmeebene auf ein Baufeld aufgetragen wird, wobei Partikelmaterial vor eine Rakeleinrichtung auf ein Baufeld gelegt und dann ausgestrichen wird und anschließend das Partikelmaterial selektiv verfestigt wird. Eine Messung einer Überschussmenge an Partikelmaterial wird dabei durchgeführt.

In einem weiteren Aspekt betrifft die Offenbarung auch eine Vorrichtung zum Herstellen von dreidimensionalen Bauteilen, umfassend eine eine Rakeleinrichtung aufweisende Beschichtungsvorrichtung und eine selektive Verfestigungseinrichtung, wobei in Beschichtungsrichtung hinter der Beschichtungsvorrichtung mindestens ein Sensor zur Messung einer Überschussmenge an Partikelmaterial vorgesehen ist.

### Kurze Beschreibung der Figuren

Figur 1: Schnitt durch eine Vorrichtung zum Herstellen von dreidimensionalen Bauteilen mit der Binder-Jetting-Technik.
Figur 2: Illustration der Überschussmenge beim Beschichtungsvorgang, wobei verschiedenen Positionen des Beschichters gezeigt sind (a), b) und c)).
Figur 3: Darstellung einer Ausbreitung von Beschichtungsfehlern beim Beschichtungsvorgang.
Figur 4: Resultierende Overfeedmenge über die Länge des Beschichters beim Beschichtungsvorgang aus Figur 3.
Figur 5: Darstellung einer Vorrichtung zur Bestimmung der Overfeedmenge mit Hilfe einer Wägevorrichtung.
Figur 6: Darstellung einer binären Methode zur Bestimmung des Vorhandenseins von Overfeed mittels eines Sensors.
Figur 7: Darstellung einer erweiterten ortsaufgelösten Bestimmung des Overfeeds.
Figur 8: Darstellung einer Umsetzung der räumlichen Overfeedverteilung in ein zeitliches Signal mit Hilfe einer Lichtschranke.

### Ausführliche Beschreibung

Im Folgenden werden einige Begriffe näher definiert. Andernfalls sind für die verwendeten Begriffe die dem Fachmann bekannten Bedeutungen zu verstehen.

Im Sinne der Offenbarung sind "Schichtbauverfahren" bzw. "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind.

"Formkörper" oder "Bauteil" im Sinne der Offenbarung sind alle mittels des offenbaren Verfahrens oder/und der offenbarten Vorrichtung hergestellte dreidimensionale Objekte, die eine Formfestigkeit aufweisen. "Baufeld" ist die Ebene oder in erweitertem Sinn der geometrische Ort, auf dem oder in dem die Partikelmaterialschüttung während des Bauprozesses durch wiederholtes Beschichten mit Partikelmaterial wächst. Häufig wird das Baufeld durch einen Boden, die "Bauplattform", durch Wände und eine offene Deckfläche, die Bauebene, begrenzt.

Unter einer "Aufnahmeebene" ist gemäss der vorliegenden Beschreibung die Ebene zu verstehen, auf die Baumaterial aufgetragen wird. Dies muss dabei nicht zwingend eine gerade Fläche sein, sondern kann ebenso eine Krümmung aufweisen. Diese Ebene muss auch nicht unbedingt einer Plattform- oder Förderbandebene entsprechen. Vielmehr kann die Aufnahmeebene beispielsweise auch eine Schüttkegelseite des Baumaterials sein.

"Ausstreichen" bedeutet gemäß der vorliegenden Offenbarung jeglich Art und Weise, mit der das Partikelmaterial verteilt wird. Beispielsweise kann an der Startposition einer Beschichtungsfahrt eine größere Pulvermenge vorgelegt werden und durch eine Klinge oder eine rotierende Walze in das Schichtvolumen verteilt oder ausgestrichen werden.

Als "Partikelmaterial" können alle für den 3D-Druck bekannten, fließfähigen Materialien verwendet werden, insbesondere in Pulverform, als Schlacke oder als Flüssigkeit. Dies können beispielsweise Sande, Keramikpulver, Glaspulver, und andere Pulver aus anorganischen Materialien, Metallpulver, Kunststoffe, Holzpartikel, Faserwerkstoffe, Cellulosen oder/und Laktosepulver sowie andere Arten von organischen, pulverförmigen Materialien. Das Partikelmaterial ist vorzugsweise ein trocken frei fließendes Pulver, aber auch ein kohäsives schnittfestes Pulver kann verwendet werden. Diese Kohäsivität kann sich auch durch Beimengung eines Bindermaterials oder eines Hilfsmaterials ergeben.

Die "Überschussmenge" oder "Overfeed" ist dabei die Menge an Partikelmaterial, die bei der Beschichtungsfahrt am Ende des Baufeldes vor dem Beschichter hergeschoben wird.

Als "Vorrichtung" zum Durchführen des offenbarten Verfahrens kann jede bekannte 3D-Druckvorrichtung zum Schichtaufbauen verwendet werden, die die erforderlichen Bauteile beinhaltet. Übliche Komponenten beinhalten Beschichter, Baufeld, Mittel zum Verfahren des Baufeldes oder anderer Bauteile, Dosiervorrichtung und Wärmemittel und andere dem Fachmann bekannte Bauteile, die deshalb hier nicht näher ausgeführt werden.

"Beschichter" oder "Recoater" ist die Einheit mittels derer das Partikelmaterial in bzw. auf das Baufeld aufgebracht wird. Dieser kann aus einem Fluidvorratsbehälter und eine Fluidauftragseinheit bestehen, wobei gemäß der vorliegenden Offenbarung die Fluidauftragseinheit einen Fluidauslass und eine eine "Rakeleinrichtung" umfasst. Diese Rakeleinrichtung könnte eine Beschichterklinge sein. Es könnte aber auch jede andere erdenkliche, geeignete Rakeleinrichtung verwendet werden. Denkbar sind beispielsweise auch rotierende Walzen.

Eine "selektive Verfestigungseinrichtung" kann beispielsweise eine Strahlungsquelle sein, die das Partikelmaterial durch Strahlungseintrag verfestigt. Daneben kann dies aber aich ein Druckkopf sein, der Bindermaterial und/oder Aktivatormaterial oder ähnliches auf das Partikelmaterial selektiv aufbringt.

Der "Druckkopf" setzt sich üblicherweise aus verschiedenen Komponenten zusammen. Unter anderem sind das die Druckmodule. Diese sind relativ zum Druckkopf ausgerichtet. Der Druckkopf ist relativ zur Maschine ausgerichtet. Damit kann die Lage einer Düse dem Maschinenkoordinatensystem zugeordnet werden.

Unter "Binder-Jetting - Schichtbauverfahren", ist zu verstehen, dass schichtweise Pulver auf eine Bauplattform aufgebracht wird, jeweils die Querschnitte des Bauteils auf dieser Pulverschicht mit einem flüssigen Binder bedruckt werden, die Lage der Bauplattform um eine Schichtstärke zur letzten Position geändert wird und diese Schritte solange wiederholt werden, bis das Bauteil fertig ist.

Unter "Lasersintern - Schichtbauverfahren", ist zu verstehen, dass schichtweise Pulver auf eine Bauplattform aufgebracht wird, jeweils die Querschnitte des Bauteils auf dieser Pulverschicht mit einem Laserstrahl aufgeschmolzen und durch Abkühlung verfestigt werden, die Lage der Bauplattform um eine Schichtstärke zur letzten Position geändert wird und diese Schritte solange wiederholt werden, bis das Bauteil fertig ist.

Beim "Stereolithographie - Schichtbauverfahren" werden in einem Behälter mit einer Flüssigkeit jeweils die Querschnitte des Bauteils mit einem Laserstrahl durch chemische Reaktion verfestigt. Die Lage der Bauplattform wird um eine Schichtstärke zur letzten Position geändert und diese Schritte solange wiederholt werden, bis das Bauteil fertig ist.

Verschiedene Aspekte der Offenbarung werden im Folgenden beschrieben.

Die Offenbarung betrifft in einem Aspekt ein Verfahren zum Herstellen von dreidimensionalen Bauteilen, wobei formloses Partikelmaterial, schichtweise in einer Aufnahmeebene auf ein Baufeld aufgetragen wird, wobei Partikelmaterial vor einer Rakeleinrichtung auf ein Baufeld gelegt und dann ausgestrichen wird und anschliessend das Partikelmaterial selektiv verfestigt wird. Dabei wird eine Messung einer Überschussmenge an Partikelmaterial durchgeführt.

Allen Schichtbauverfahren ist gemein, dass sie eine Überschussmenge an Partikelmaterial aufweisen, die sich je nach Verfahren und Einstellung bis zum Ende der Beschichtungsstrecke ansammelt und/oder aus dem Ursprungsvolumen abreichert. Diese Menge wird auch als Overfeed bezeichnet. Die Überschussmenge ist dabei die Menge an Pulver, die bei der Beschichtungsfahrt am Ende des Baufeldes vor dem Beschichter hergeschoben wird.

Tritt am Ende der Beschichterstrecke kein Overfeed auf, kann man üblicherweise davon ausgehen, dass die Schicht nicht vollständig verfüllt worden ist. Das Vorhandensein des Overfeeds am Ende der Beschichterstrecke ist ein Hinweis darauf, dass zu viel Pulver verarbeitet wird, die Schicht aber vollständig verfüllt sein muss.

Die vorliegende Offenbarung nutzt diese Eigenschaft, um einen sicheren Prozessablauf bezüglich der Partikelmaterialbeschichtung zu dokumentieren. Gemäss einer bevorzugten Ausführungsform der Offenbarung wird das Verfahren derart durchgeführt, dass die Messung der Überschussmenge am Ende und/oder während einer Beschichterfahrt erfolgt.

Gemäss einer besonders bevorzugten Ausführungsform der vorliegenden Offenbarung wird bei dem Verfahren die Messung der Überschussmenge ortsaufgelöst und vorzugsweise über eine gesamte Beschichterbreite durchgeführt.

Die kann mit verschiedenen Verfahren erfolgen. Man kann beispielsweise mehrere Sensoren kurz nach dem Baufeld in der Breite des Beschichters anordnen und deren Signale differenziert auswerten. Ebenso denkbar ist es einen quasi-analogen ortsaufgelösten Sensor zu verwenden. Das Analogsignal muss dann zeitlich ausgewertet werden. Auch kann der Overfeed, wie in dieser Schrift beschrieben, auch durch eine besondere Ausführung der Vorrichtung zeitlich aufgelöst werden.

Mit einem solchen Verfahren ist es nun möglich, dass ortsaufgelöst, quer zur Beschichtungsrichtung, Informationen gewonnen werden. Allerdings sollte hier beachtet werden, dass verfahrensbedingt, durch das Ineinanderlaufen des Pulvers, diese Auflösung begrenzt ist.

Prozessfehler, wie hier vorliegend verwendet wird, sind nicht mit Partikelmaterial verfüllte Stellen nach der Überfahrt des Beschichters. Versuche zeigen, dass schwere Prozessfehler auf dem Baufeld beginnen und sich meist in Richtung des Endes der Beschichtungsstrecke aufweiten. So kann eine für das jeweilige System relevante Auflösung bestimmt werden. Mit Hilfe dieser Auflösung kann dann die Dichte der sensierenden Elemente bestimmt werden oder das Auswerteverfahren beurteilt werden.

Vorzugsweise kann bei einem Verfahren nach der Offenbarung auch vorgesehen sein, dass die Messung der Partikelmaterialverteilung während der Beschichterfahrt erfolgt und durch die Messung direkt eine Partikelmaterialzuführung gesteuert wird.

Soll neben der Messung auch noch eine Regelung stattfinden, sollte auch eine Art Stellglied vorgesehen sein, das auf die Pulvermenge wirkt.

Nach einem weiteren Aspekt der betrifft die Offenbarung auch eine Vorrichtung zum Herstellen von dreidimensionalen Bauteilen umfassend eine eine Rakeleinrichtung aufweisende Beschichtungsvorrichtung und eine selektive Verfestigungseinrichtung. Dabei ist in Beschichtungsrichtung hinter der Beschichtungsvorrichtung mindestens ein Sensor zur Messung einer Überschussmenge an Partikelmaterial vorgesehen.

Ist gemäß einer bevorzugten Ausführungsform der Sensor am Ende einer Beschichterstrecke vorgesehen, so kann am Ende gemessen werden, ob eine Überschussmenge vorhanden ist oder nicht. Wie oben schon beschrieben wurde, breiten sich Beschichtungsfehler über die Auftragsstrecke aus und sind somit auch am Ende der Beschichterfahrt zu erkennen.

Die Sensoren zur Messung des Overfeeds können dabei binäre, digitale, analoge und/oder chromatographische Sensoren sein.

Grundsätzlich können alle zur Detektion des Vorhandenseins von Pulver geeigneten Sensoren zum Einsatz kommen. Beispielhaft hierfür sind optische Sensoren, kapazitive Sensoren oder auch Wägezellen.

Alle Sensoren sollen dabei so angeordnet sein, dass sie das Overfeedpulver sicher erkennen und schichtweise wieder gleiche Bedingungen herrschen. Um den zweiten Effekt zu erreichen, können passive oder aktive Ausgestaltungen genutzt werden. Passiv könnte zum Beispiel ein Pulverabfallschacht sein, in den das Overfeedpulver hineinfällt und beim Fallen detektiert wird. Ebenso kann das Pulver durch den Beschichter erst an eine Messstelle und dann in einen Abfallschacht geschoben werden. Diese Bewegung kann auch integriert, kontinuierlich verlaufen. Bei einer aktiven Vorrichtung im Sinne dieser Offenbarung wird der Zustand durch ein Zusatzelement wieder zwangsweise hergestellt. Ein Beispiel hierfür könnte eine Klappe sein, auf der das Overfeedpulver sensiert wird und im Anschluss in einen Abfallbehälter verklappt wird.

Ein binärer Sensor im Sinne der Offenbarung stellt nur fest, ob Overfeedpulver nach Beschichtungsprozess vorhanden ist oder nicht. Eine solche Anordnung kann z.B. über einen Initiator erreicht werden, der hinter dem Baufeld unterhalb der Beschichterebene angeordnet wird. Seine sensitive Fläche muss in Richtung des Overfeedpulver angeordnet sein. Es eignen sich beispielsweise optische und kapazitive Sensoren.

Eine solche Anordnung eignet sich nur um sehr starke Störungen des Beschichtungsvorganges zu erkennen. Ein Fehlerort kann nicht ausgemacht werden.

Eine ähnliche Wirkung kann durch die Anordnung mehrerer Sensoren quer zur Beschichtungsrichtung hinter dem Baufeld erzielt werden. Durch die gesteigerte Auflösung ist dieser "digitale Sensor" weit besser geeignet, den Beschichtungsvorgang zu überwachen. Mit dieser Anordnung können wesentlich kleinere Fehler erfasst werden, und die Menge der Sensoren kann den Prozessbedingungen angepasst werden. Das Signal ist bei diesem Verfahren ortsaufgelöst.

Wird das Overfeedpulver von einer analog messenden Einrichtung erfasst, kann dies die Überwachung des Beschichtungsvorganges weiter verbessern. Ein solcher Sensor kann eine Wägeeinrichtung sein. Das Signal kann quantitativ die Größe der Störung wiedergeben. Eine Ortsauflösung ist nicht möglich.

Wird der Abfallschacht in einem Winkel zum Beschichter angeordnet und das Pulver im Abfallschacht mit einem Richter zusammengeführt, kann über das Messen des zeitlichen Pulverdurchganges auf den Ort der Störung zurückgeschlossen werden. Für diese Messung eignen sich eine Vielzahl von Verfahren. Beispielsweise können Lichtschranken, aber auch Wägezellen zum Einsatz kommen.

Gemäss einer bevorzugten Ausführungsform ist bei einer Vorrichtung nach der Offenbarung vorgesehen, dass zu einem Zuführen von Partikelmaterial während einer Beschichterfahrt auf ein Baufeld eine Partikelmaterialzuführung vorgesehen ist.

Soll darüberhinaus auch noch eine Regelung stattfinden, sollte auch eine Art Stellglied vorgesehen sein, das auf die Pulvermenge wirkt.

Eine solche Steuerung der Partikelmaterialzuführung kann dabei beispielsweise über Sensoren steuerbar.

Im Folgenden wird die vorliegende Offenbarung anhand von Beispielen näher erläutert, die bevorzugte Ausführungsformen darstellen.

Die Basisvorrichtung zur Anwendung der Offenbarung ist eine Vorrichtung zur Produktion im Sinne des Additive Manufacturing. Hierbei sind pulverbasierte Verfahren wesentlich.

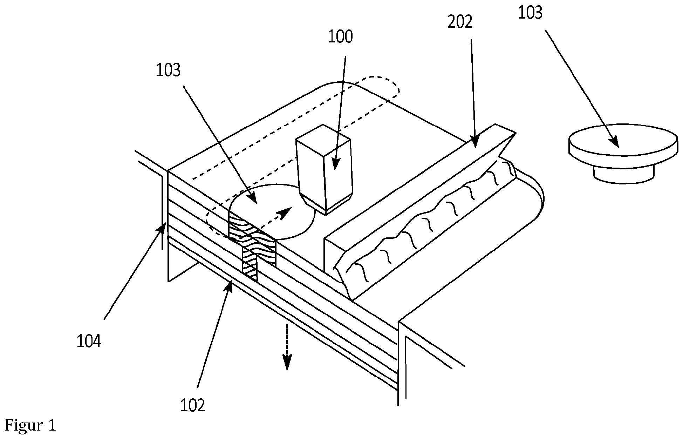

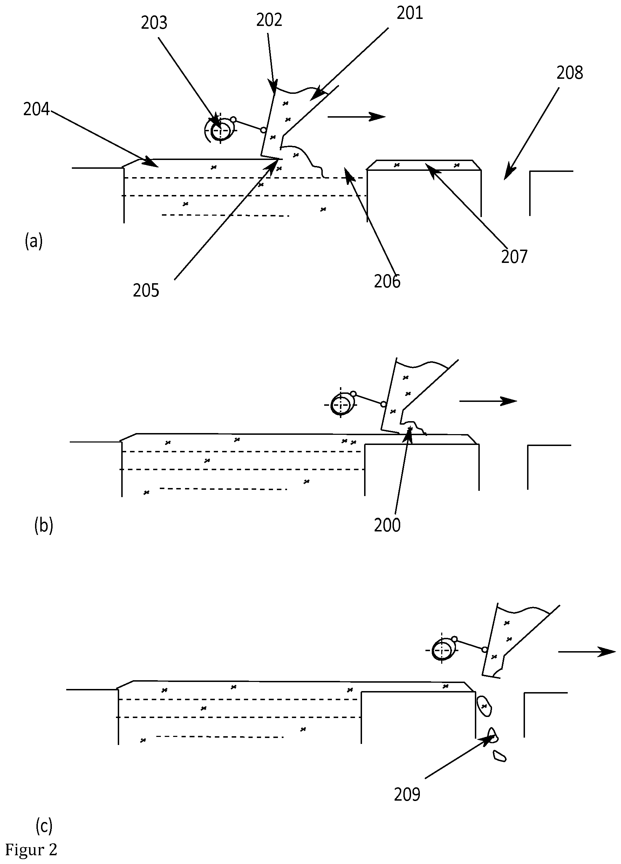

Bei pulverbasierten Verfahren muss eine dünne Pulverschicht als Prozessgrundlage erzeugt werden. In Figur 1 und 2 ist dies beispielhaft dargestellt. Auf eine Bauplattform (102), die in einem Baubehälter (104) vorgesehen ist, wird eine Partikelschicht aufgebracht. Generell gibt bei den Verfahren des Standes der Technik diese Bauplattform (102) und deren Bewegung die Gestalt und die Geometrie der Schicht vor. Üblicherweise werden Schichten mit exakt parallelen Boden und Deckflächen (204) gewünscht. Deshalb wird die Bauplattform (102) exakt geführt, und ihre Bewegung definiert die Schichtstärke.

Dieses Volumen (206) wird durch den sogenannten Beschichter (202) mit Pulver aufgefüllt. Dabei wird meist an der Startposition der Beschichtungsfahrt eine größere Pulvermenge vorgelegt und durch die Klinge (205) oder eine rotierende Walze in das Schichtvolumen (206) ausgestrichen. Das Pulver kann aber auch während des Beschichtungsvorganges nachgefördert werden.

Die Pulvermenge kann beispielsweise im Beschichter selbst bevorratet werden (201). Am Baufeldbeginn beginnt der Beschichter, Pulver in Fahrtrichtung abzugeben. Während der Beschichtungsfahrt wird weiter kontinuierlich Pulver abgegeben, um den Verlust durch die Schichtverfüllung auszugleichen oder zumindest dafür zu sorgen, dass auch am Ende der Beschichtungsfahrt noch ausreichend Material zum Verfüllen vorliegt. Am Ende der Beschichterfahrt vorliegendes Overfeedpulver kann über den Baufeldrand hinausgeschoben werden und dort herabfallen (209).

Die Pulvermenge vor dem Beschichter sollte nicht unnötig groß sein. Zu große Pulvermengen sind hier in zweierlei Hinsicht für den Schichtbauprozess schädlich. Zum einen führt eine große Menge vor Beschichter zu verhältnismäßig starken Kräften auf die im Entstehen befindlichen Bauteile im Pulver. Das kann zu Deformationen führen. Zum Anderen ist ein großer Overfeed am Ende der Beschichtungsfahrt nicht wünschenswert, da das eigentlich unverbrauchte Material dem Prozess nur nach einer aufwändigen Siebung wieder zugeführt werden kann. Die Wahrscheinlichkeit ist hoch, dass dieses Pulver Kontaminationen wie Bauteilbruch oder Spuren von Bindemittel enthält.

Der Pulverfluss des beispielhaften Beschichtungssystems mit "innerer Bevorratung" wird über Vibrationen über einen exzentrischen Antrieb (203) geschaltet. Der Beschichter selbst ist als längliches Silo ausgeführt, das an seinem unteren Ende in Beschichtungsrichtung eine schmale Öffnung aufweist. Das Pulver kann ohne Vibrationen den schmalen Spalt nicht verlassen, da sich Brücken aus den Partikeln bilden oder das Pulver in einem Längsspalt ausläuft (601). Durch die Energie der Vibrationen werden entweder die Brücken gebrochen oder der Materialschüttwinkel verändert. Das Material fließt aus.

Der Ausfluss wird bei diesem beispielhaften System durch die Menge, die vor dem Beschichter den Überschuss der Verfüllung bildet, begrenzt. Damit wird hier ein selbstregulierendes Prinzip verwirklicht.

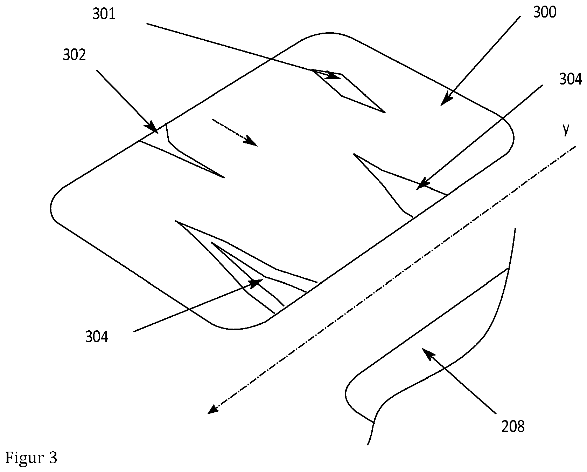

Fehler beim Beschichtungsprozess, so zeigen Versuche, sind meist durch ungenügendes Nachfließen von Pulver in das zu verfüllende Volumen (206) bedingt. Da diese Fehler sich während der Beschichtungsfahrt weiter entwickeln, gibt es häufige und weniger häufige Fehlerbilder (siehe Figur 3). Dabei sind Fehler am Anfang der Beschichtungsfahrt (302), die sich wieder schließen, extrem selten. Ebenso treten lokale Störungen (301) im Baufeld (300) ohne eine Ausbreitung nach hinten nicht auf. Die häufigsten Fehler (303) beginnen mitten im Baufeld (300) und verstärken sich bis zum Ende der Beschichtungsstrecke. Deshalb kann ein Ausbleiben des Overfeeds sehr gut Störungen im Beschichtungsvorgang charakterisieren. Bei Fehlen einer Reaktion bilden sich Schicht für Schicht tiefere Gräben (304) aus, die die Bauteile durchtrennen.

Ein, wie im Beispiel vorgestellter, über einen Exzenter (203) angetriebener Beschichter (202) eignet sich besonders für eine Regelung. Die Pulvermengenobergrenze ist durch den beschriebenen Mechanismus eingeregelt. Die untere Grenze kann durch die Bewertung des Overfeeds gut beobachtet werden.

Der Beschichter schiebt den Overfeed (200) nach dem Baufeld bei Vorrichtungen des Standes der Technik weiter zu einem Abfallschacht (208), damit das Pulver den weiteren Bauprozess nicht stört. Der Teil nach Baufeld der Vorrichtung ist üblicherweise mit einer dünnen Pulvermenge (207) bedeckt, die vor Beginn des eigentlichen Bauprozesses durch den Overfeed, ähnlich wie auf der Bauplattform aufgebaut wird.

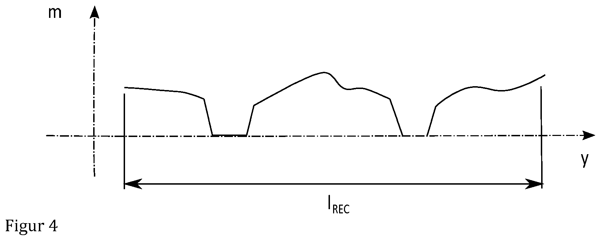

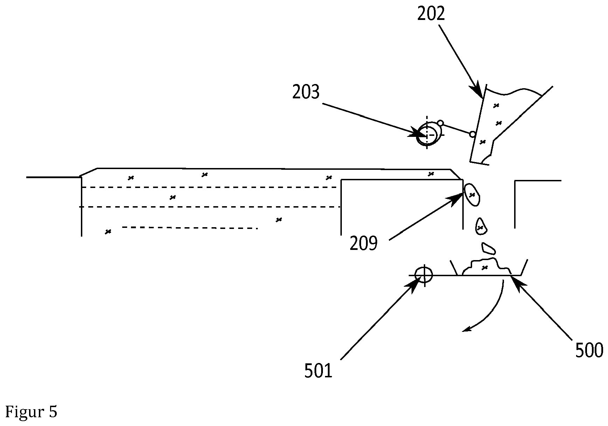

Figur 4 zeigt ein Diagramm das den Massenfluss aus dem Beschichter zu einem Zeitpunkt wiedergibt. Die Figur gibt als Diagramm beispielhaft wieder welcher Fehlerzustand des Beschichters durch das Verfahren erkannt werden soll. Es ist zu sehen wie Verstopfungen im Pulverspalt die Ausflussmenge beeinflussen. In Figur 5 ist eine Ausführungsform dargestellt, bei der der Overfeed (200) über den Baufeldrand herabfällt (209) und dann in der Schale einer Wägevorrichtung (500) landet, wodurch der Overfeed (200) durch wiegen gemessen werden kann. Nach dem Wiegen kann die Schale (500) über ein Drehgelenk (501) automatisch geleert werden.

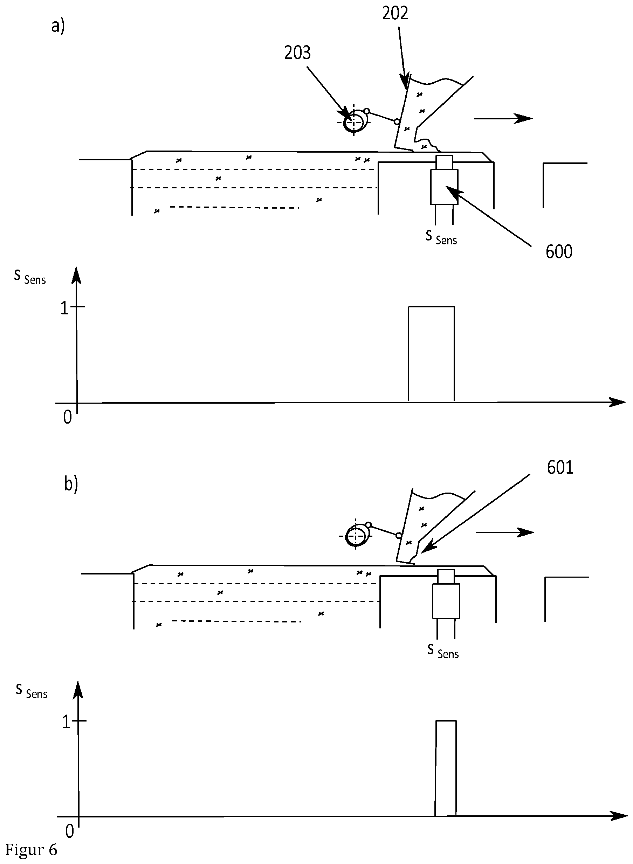

In dem in Figur 6 dargestellten Beispiel sind vor dem Abfallschacht (208) kapazitiven Sensoren (600) angeordnet. Je nach gewünschter Auflösung wird ein oder mehrere Sensoren verbaut. Sie werden so justiert, dass sie die dünne, während des Bauprozesses unveränderliche, Pulverschicht über ihnen nicht detektieren. Läuft aber eine zusätzliche Pulvermenge über die Sensoren (600), geben diese ein Signal.

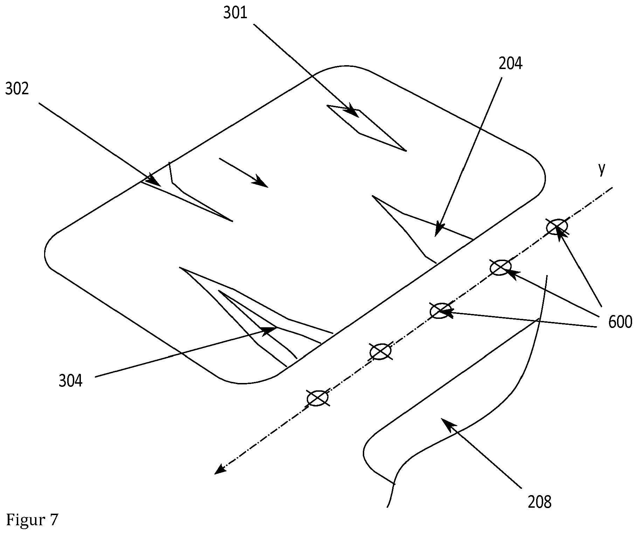

Die Steuerung muss dafür sorgen, die Signale der Overfeedmenge und des Beschichterkörpers oder der Klinge zu differenzieren . Die Anordnung der Sensoren relativ zum Baufeld zeigt Figur 7. Dies kann über eine exakte Positionsbestimmung und einem zeitlichen Abgleich mit dem Signal erfolgen. Ebenso kann die Steuerung so ausgeführt werden, dass der Beschichter mit dem Overfeed auf der Höhe Sensoren stoppt und ein Stück zurück gefahren wird und so das Sensorsignal nicht beeinflusst. So ist die Messung nicht mehr zeitkritisch und die Anforderungen an die Auswertung sind wesentlich geringer.

Um eine räumliche Auflösung der Information zu erzielen, werden in der bespielhaften Vorrichtung mehrere Sensoren (600) in einer zum Beschichter parallelen Linie verbaut. In diesem Beispiel soll der Beschichter eine Baufeldbreite von 550 mm abdecken können, und die Sensoren werden über diese Länge gleich verteilt. Damit können Fehler mit einer Dimension von ca. 50 mm am Ende Baufeldes sicher erkannt werden.

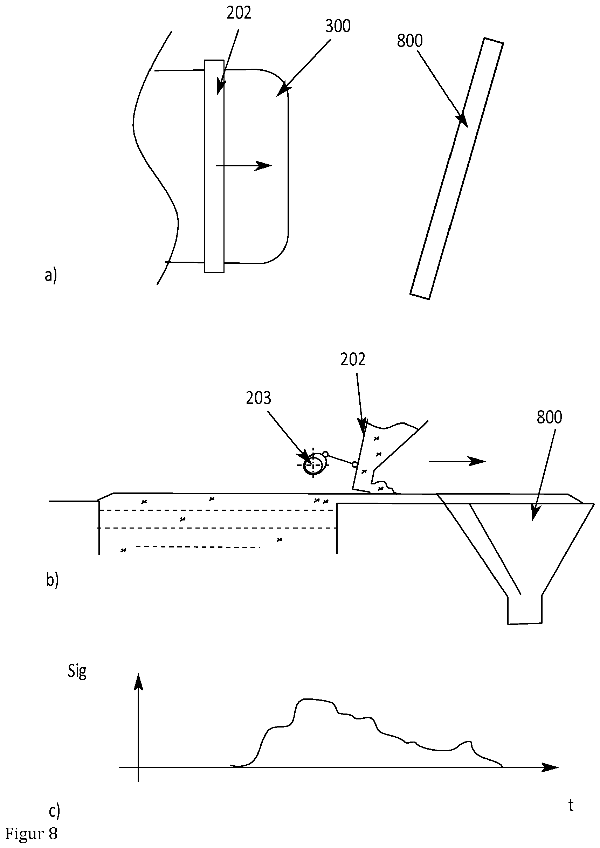

Eine weitere Möglichkeit eine räumliche Auflösung zu erzielen, gibt Figur 8 wieder. In der Draufsicht a) ist das Baufeld von oben mit Beschichter und einem gedrehten Pulverabfallschacht dargestellt. Wie in der Seitenansicht b) zu sehen wird der Abfallpulverstrom mit einem Trichter zusammengefasst. Dadurch würde bei einer Überfahrt über den Abfallschacht das Overfeedpulver nach und nach in den Trichter fallen und es ergibt sich so eine Möglichkeit zur Erfassung der örtlichen Pulverausflussmenge. Ein beispielhaftes Signal ist in Figur 8c) dargestellt. Es zeigt ein Ausflussverhalten bei dem jeweils an Rändern des Beschichters weniger Pulver austritt.

Bei dieser Anordnung werden fünf Sensoren wie folgt ausgewertet: Liefert einer der Sensoren kein Signal, wird die Vibration bei der Erzeugung der nächsten Schicht des Bauprozesses, hier über die Drehzahl der exzentrischen Anregung (203), verstärkt. Liefern alle Sensoren Signale, wird die Drehzahl bei der nächsten Schicht heruntergeregelt. Dadurch wird der Beschichtungsvorgang für den Bauprozess in einem nahezu optimalen Korridor gehalten.

Der Beschichter (202) selbst ist als längliches Silo ausgeführt, das an seinem unteren Ende in Beschichtungsrichtung eine schmale Öffnung aufweist. Das Pulver kann ohne Vibrationen den schmalen Spalt nicht verlassen, da sich Brücken aus den Partikeln bilden oder das Pulver in einem Längsspalt ausläuft (601). Durch die Energie der Vibrationen werden entweder die Brücken gebrochen oder der Materialschüttwinkel verändert. Das Material fließt aus.

Typische Drehzahlen der Vibrationsanregung bei der oben beschriebenen Anordnung liegen bei 3000 1/min. Die Regelung verstellt die Drehzahl der Beschichtung pro Schicht um diskrete Werte - je nach Sensorergebnis wird die Drehzahl diskret reduziert oder gesteigert. Bevorzugt wird die Drehzahl in Schritten von 10 1/min verstellt. Mehr bevorzugt sind 50 1/min. Bei 300 1/min sind auch rasche Wechsel von Pulverqualitäten verarbeitbar - allerdings steigt die Fehleranfälligkeit wieder. Den Schrittgrößen sind im Drehzahlbereich von 0 bis 6000 1/min prinzipiell keine Grenzen gesetzt.

Ebenso kann die Regelung auf andere Parameter wirken, wenn beispielsweise die Pulverabgabemenge nicht über Drehzahl gesteuert wird. Beispielweise kann der Hub eines Vorlagezylinders angepasst werden. Je nach Sensorergebnis wird der Hub erhöht oder reduziert.

Die beschriebene Vorrichtung kann ebenso nur zu einer Prozesskontrolle genutzt werden. Das Signal der Sensoren (600) wird hierfür Schicht für Schicht protokolliert. Dies kann wünschenswert sein, wenn die Parameter, die verstellt werden können, beispielsweise die Bauteileigenschaften beeinflussen, dies aber nicht akzeptabel ist. Die Information kann darüber hinausgehend genutzt werden, um dem Bediener der Maschine eine Warnung anzuzeigen.

Im Prozessablauf der Maschine folgt auf die Beschichtungsfahrt das Bedrucken des Baufeldes mit einem Druckkopf (100). Daran anschließend können je nach Prozess noch weitere Schritte erfolgen. Sind diese durchgeführt, wird die Bauplattform (102) bewegt und auf eine Position gebracht, die es ermöglicht, durch den Beschichter die nächste Schicht zu erzeugen. Bei dieser nächsten Beschichtungsfahrt werden die durch die Regelung veränderten Parameter benutzt. Wieder wird die Beschichtungsfahrt durch den Regelungsmechanismus bewertet.

Die Bauteile (103) werden durch andauerndes Wiederholen dieses Ablaufs fertiggestellt.

### Bezugszeichenliste

- 100: Druckkopf
- 102: Bauplattform
- 103: Bauteil
- 104: Baubehälter
- 200: Overfeed
- 201: Pulvervorrat
- 202: Beschichter
- 203: Exzentervibrationsantrieb
- 204: Deckschicht/ Baufläche
- 205: Nivellierklinge
- 206: Noch nicht verfüllter Schichtbereich
- 207: Nivelliertes Pulver außerhalb des Baufeldes
- 208: Pulverabfallschacht
- 209: Fallendes Overfeedpulver
- 300: Baufeld / Baufläche
- 301: Innerer Beschichtungsfehler
- 302: Beschichtungsfehler am Beschichtungsfahrtstartpunkt
- 303: Beschichtungsfehler am Ende des Baufeldes
- 304: Tiefer Beschichtungsfehler
- 500: Schale einer Wägeeinrichtung
- 501: Drehgelenk zur automatisierten Entleerung
- 600: Sensor zur Pulvererfassung
- 601: Gestockter Pulverausfluss
- 800: Gedrehter Pulverabfallschacht

## Patentansprüche

1. Verfahren zum Herstellen von dreidimensionalen Bauteilen (103), wobei formloses Partikelmaterial schichtweise in einer Aufnahmeebene auf ein Baufeld (300) aufgetragen wird, wobei Partikelmaterial vor einer Rakeleinrichtung auf ein Baufeld (300) gelegt und dann ausgestrichen wird und anschließend das Partikelmaterial selektiv verfestigt wird, **dadurch gekennzeichnet, dass** eine Messung einer Überschussmenge (200) an Partikelmaterial durchgeführt wird, wobei die Überschussmenge (200) dabei die Menge an Partikelmaterial ist, die bei der Beschichtungsfahrt am Ende des Baufeldes (300) vor dem Beschichter (202) hergeschoben wird.

2. Verfahren nach Anspruch 1, **dadurch gekennzeichnet, dass** die Messung am Ende und/oder während einer Beschichterfahrt erfolgt.

3. Verfahren nach einem der vorhergehenden Ansprüche, **dadurch gekennzeichnet, dass** die Messung ortsaufgelöst und vorzugsweise über eine gesamte Beschichterbreite erfolgt.

4. Verfahren nach einem der vorhergehenden Ansprüche, **dadurch gekennzeichnet, dass** die Messung während der Beschichterfahrt erfolgt und durch die Messung direkt eine Partikelmaterialzuführung gesteuert wird.

5. Vorrichtung zum Herstellen von dreidimensionalen Bauteilen, umfassend eine eine Rakeleinrichtung aufweisende Beschichtungsvorrichtung (202) und eine selektive Verfestigungseinrichtung, **dadurch gekennzeichnet, dass** in Beschichtungsrichtung hinter der Beschichtungsvorrichtung (202) mindestens ein Sensor (600) zur Messung einer Überschussmenge (200) an Partikelmaterial vorgesehen ist.

6. Vorrichtung nach Anspruch 5, **dadurch gekennzeichnet, dass** der Sensor am Ende einer Beschichterstrecke vorgesehen ist.

7. Vorrichtung nach einem der vorhergehenden Ansprüche 5 und 6, **dadurch gekennzeichnet, dass** der oder die Sensoren binäre, digitale, analoge und/oder chromatographische Sensoren sind.

8. Vorrichtung nach einem der vorhergehenden Ansprüche 5 bis 7, **dadurch gekennzeichnet, dass** zu einem Zuführen von Partikelmaterial während einer Beschichterfahrt auf ein Baufeld eine Partikelmaterialzuführung vorgesehen ist.

9. Vorrichtung nach Anspruch 8, **dadurch gekennzeichnet, dass** die Partikelmaterialzuführung durch den oder die Sensoren steuerbar ist.

## Claims

1. A method for producing three-dimensional components (103), wherein amorphous particulate material is applied layer by layer in a receiving plane onto a construction field (300), wherein particulate material is placed in front of a coating knife device on a construction field (300) and then spread, and subsequently the particulate material is selectively solidified, **characterized in that** a measurement of an excess quantity (200) of particulate material is carried out,
wherein the excess quantity (200) is the amount of particulate material which is pushed forward in front of the coater (202) during the coating pass at the end of the construction field (300).

2. The method according to claim 1, **characterized in that** the measurement is carried out at the end of a coating pass and/or during a coating pass.

3. The method according to any one of the preceding claims, **characterized in that** the measurement is performed in a space-resolved manner and preferably over an entire coater width.

4. The method according to any one of the preceding claims, **characterized in that** the measurement is performed during the coating pass and a particulate material feed is controlled directly by said measurement.

5. A device for producing three-dimensional components, comprising a coating device (202) which includes a coating knife device and comprising a selective solidifying means, **characterized in that** at least one sensor (600) for measuring an excess quantity (200) of particulate material is provided after the coating device (202) in the coating direction.

6. The device according to claim 5, **characterised in that** the sensor is provided at the end of a coater travel distance.

7. The device according to any one of the preceding claims 5 and 6, **characterized in that** the sensor or sensors are binary, digital, analog and/or chromatographic sensors.

8. The device according to any one of the preceding claims 5 to 7, **characterized in that** a particulate material feed is provided to supply particulate material to a construction field during a coater pass.

9. The device according to claim 8, **characterized in that** the particulate material feed is controllable by the sensor or sensors.

## Revendications

1. Procédé de fabrication de composants tridimensionnels (103), dans lequel du matériau particulaire amorphe est appliqué couche par couche dans un plan de réception sur un champs de construction (300), le matériau particulaire étant placé devant un dispositif de racle sur un champs de construction (300) et puis étalé, et ensuite le matériau particulaire est solidifié sélectivement, ledit procédé étant **caractérisé en ce que** l'on effectue une mesure d'une quantité de surplus (200) dudit matériau particulaire,
ladite quantité de surplus (200) étant la quantité de matériau particulaire déplacée devant l'enducteur (202) lors du passage de l'enducteur à la fin du champs de construction (300).

2. Procédé selon la revendication 1, **caractérisé en ce que** la mesure est effectuée à la fin d'un passage de l'enducteur et/ou pendant un passage de l'enducteur.

3. Procédé selon l'une quelconque des revendications précédentes, **caractérisé en ce que** la mesure est effectuée à résolution spatiale et de préférence sur une largeur entière de l'enducteur.

4. Procédé selon l'une quelconque des revendications précédentes, **caractérisé en ce que** la mesure est effectuée pendant le passage de l'enducteur et une alimentation en matériau particulaire est commandée directement par ladite mesure.

5. Dispositif de fabrication de composants tridimensionnels, comportant un dispositif de revêtement (202) incluant un dispositif de racle et comportant en outre un moyen de solidification sélective, ledit dispositif étant **caractérisé en ce que** l'on prévoit, après le dispositif de revêtement (202) dans la direction de revêtement, au moins un capteur (600) pour mesurer une quantité de surplus (200) de matériau particulaire.

6. Procédé selon la revendication 5, **caractérisé en ce que** le capteur est prévu à la fin d'un chemin d'enducteur.

7. Dispositif selon l'une quelconque des revendications précédentes 5 et 6, **caractérisé en ce que** le ou les capteurs sont des capteurs binaires, numériques, analogiques, et/ou chromatographiques.

8. Dispositif selon l'une quelconque des revendications précédentes 5 à 7, **caractérisé en ce que** l'on prévoit une alimentation en matériau particulaire destinée à alimenter un champs de construction en matériau particulaire pendant un passage d'enducteur.

9. Procédé selon la revendication 8, **caractérisé en ce que** l'alimentation en matériau particulaire est commandable par le ou les capteurs.
